# EUROPEAN PATENT SPECIFICATION

(11) **EP 2 366 724 B1**
(45) Date of publication and mention of the grant of the patent: **16.01.2013**
(21) Application number: 11157575.9
(22) Date of filing: 10.03.2011
(51) Int. Cl.: C08F 285/00, C08L 51/06, C08F 8/46, C08L 77/00

(54) **Polyethylene resin composition**
Polyethylenharzzusammensetzung
Composition de résine de polyéthylène

(30) Priority: 15.03.2010 KR 20100022810
(43) Date of publication of application: 21.09.2011
(73) Proprietor: AXIAmaterials Co. Ltd., Gyeonggi-do 445-962 (KR)
(72) Inventor: Park, Seong Ki, 446-570, Gyeonggi-do (KR); Jin, Chang Woo, 435-044, Gyeonggi-do (KR); Cho, Se Hyun, 463-832, Gyeonggi-do (KR); Lee, Chan Ki, 423-060, Gyeonggi-do (KR)
(74) Representative: Cabinet Plasseraud

(56) References cited:
- EP-A1- 1 992 652
- EP-B1- 1 299 438
- US-A- 5 643 997
- US-A1- 2008 163 978

## Description

This application claims the benefit of Korean Patent Application No. 10-2010-0022810 filed on March 15, 2010 .

### BACKGROUND

### Field of the Invention

This invention relates to a polyethylene resin composition.

### Description of the Related Art

Engineering plastics have been used as structural materials, finishing materials, or coating materials in the whole industry thanks to good mechanical properties, chemical resistance, thermal resistance, and light weight compared to metallic materials. In particular, polyamide resin has good physical properties, such as tensile strength, flexural modulus, chemical resistance, or thermal resistance, well-balanced overall physicochemical features, and excellent processability, and has been widely used in various fields including parts for electric/electronic equipments, and sporting goods as well as vehicles.

Besides, polyamide resin which is one of the most widely used engineering plastic has been known to be stiff and tough. Especially, very tough resin composition may be obtained by reinforcing impact resistance of the polyamide resin, and thus polyamide resin whose impact resistance has been reinforced with an impact strength enhancing material occupies more than about 10% of the entire polyamide resin.

As an additive for polyamide resin, modified polyethylene resin has been conventionally used that is obtained by introducing a maleic anhydride into a branch of a polyethylene resin such as poly(ethylene-propylene) elastomer or poly(ethylene-l-oetene) elastomer by chemical bonding. A polyethylene resin has high impact strength at room temperature or sub-zero temperature and very low glass transition temperature. Accordingly, when blended with engineering plastics, the polyethylene resin may absorb shock in the blended resin to prevent the resin from being damaged or broken. For better performance, the polyethylene resin needs to be uniformly dispersed in the engineering plastics with uniform particle size. However, a great polarity gap exists between the polyethylene resin and the engineering plastics, and this causes the two materials not to be blended well. To solve this problem, a technology had been suggested to raise miscibility between the two materials by introducing maleic anhydride or derivative of acetic acid into a branch of the polyethylene resin.

The amount of the modified polyethylene resin to be used depends on the impact strength required for a polyamide resin composition, and a good amount of modified polyethylene resin should be added to acquire a polyamide resin composition with high impact strength. However, since the modified polyethylene resin has low strength and stiffness compared to polyamide resin, adding a great amount of modified polyethylene resin to the polyamide resin composition may raise impact strength but deteriorate other physical properties. Furthermore, manufacturing costs may be increased. Accordingly, there is a need of a functional resin that may provide a polyamide resin composition with equal or more impact strength with less amount than the conventional modified polyethylene resin.

### SUMMARY

An embodiment of the present invention is to provide a modified polyethylene resin composition that is miscible and compatible with polyamide resin and thus provide good performance of reinforcing impact strength.

A polyethylene resin composition according to an embodiment of the present invention includes: a base resin containing a polyethylene resin alone or an admixture of a polyamide resin and a polyethylene resin; a polyacrylate copolymer obtained by absorbing an acrylate monomer, a functional monomer which is any one selected from an acrylic acid, a methacrylic acid, and a mixture of an acrylic acid and a methacrylic acid, and a polymerization initiator into the base resin, followed by polymerization; and a maleic anhydride introduced in a branch the base resin and of the polyacrylate copolymer by chemical reaction, wherein the polyacrylate copolymer of 1.1 to 96.6 parts by weight is dispersed in the base resin of 100 parts by weight.

### BRIEF DESCRIPTION OF THE DRAWINGS

The accompanying drawings, which are included to provide a further understanding of the invention and are incorporated on and constitute a part of this specification illustrate embodiments of the invention and together with the description serve to explain the principles of the invention.

Fig. 1 is an expanded view illustrating a polyamide resin composition manufactured according to Comparative example 2.

Fig. 2 is an expanded view illustrating a polyamide resin composition manufactured according to experimental example 21.

### DETAILED DESCRIPTION OF PREFERRED EMBODIMENTS

Hereinafter, exemplary embodiments of the present invention will be described with reference to accompanying drawings.

The embodiment provides a polyethylene resin composition that includes a base resin containing a polyethylene resin alone or an admixture of a polyamide resin and a polyethylene resin; a polyacrylate copolymer obtained by absorbing an acrylate monomer, a functional monomer which is any one selected from an acrylic acid, a methacrylic acid, and a mixture of an acrylic acid and a methacrylic acid, and a polymerization initiator into the base resin, followed by polymerization; and a maleic anhydride introduced in the base resin and polyacrylate copolymer by reactive extrusion, wherein the polyacrylate copolymer of 1.1 to 96.6 parts by weight is dispersed in the base resin of 100 parts by weight.

The polyethylene resin composition according to the embodiment includes a base resin containing a polyethylene resin alone or an admixture of a polyamide resin and a polyethylene resin, and a polyacrylate copolymer obtained by absorbing an acrylate monomer, a functional monomer, and a polymerization initiator, followed by polymerization.

The polyethylene resin according to the embodiment may be a polyethylene copolymer or a homo-polymer of ethylene, a polyethylene resin in which a functional group is introduced in a branch by chemical bonding, or an admixture thereof.

The polyethylene copolymer may be a copolymer of ethylene and α-olefin, such as 1-butene, 1-hexene, and 1-octene that may be polymerized with ethylene.

The copolymer of ethylene and α-olefin may be poly (ethylene-co-1-octene), poly (ethylene-co-1-butene), poly (ethylene-co-propylene), poly (ethylene-co-propylene-co-diene) or an admixture of two or more thereof.

The polyethylene resin in which a functional group is introduced in a branch by chemical bonding may be poly (ethylene-co-methyl acrylate), poly (ethylene-co-ethyl acrylate), poly (ethyl ene-co-butyl acrylate), poly (ethylene-co-acrylic acid), poly (ethylene-ca-methacrylic acid), poly (ethylene-co-glycidyl methacrylate), poly (ethylene-co-maleic acid), poly (ethylene-co-vinyl acetate), poly (ethyl ene-co-acryl amide), and poly (ethylene-co-acrylonitrile), or an admixture of two or more thereof.

The polyamide resin according to the embodiment may be polyamide 6, polyamide 6,6, polyamide 12, polyamide 4,6, polyphthalamide, polyamide 6,T or polyamide 9,T. And, the base resin may be a polyethylene resin alone or an admixture of polyamide resin and a polyethylene resin.

The acrylate monomer may be an alkyl acrylate monomer or alkyl methacrylate monomer, or a mixture thereof.

Alkyl acrylate may include one or more, more specifically two or more carbon atoms in an alkyl chain. Alkyl acrylate employed in the embodiment may include, but not limited to, methyl acrylate, ethyl acrylate, butyl acrylate, or ethylhexyl acrylate.

Alkyl methacrylate may include 1 to 18 carbon atoms in an alkyl chain. Alkyl 1 methacrylate employed in the embodiment may include, but not limited to, methyl methacrylate, ethyl methacrylate, or butyl methacrylate.

The functional monomer includes an acrylic acid, a methacrylic acid, or a mixture of an acrylic acid and a methacrylic acid.

The polymerization initiator is used to create a free radical reaction to generate a polymer and may include, but not limited to, azobisisobutyronitrile, Benzoyl peroxide, Lauroyl Peroxide, t-butyl peroxide, dicumyl peroxide, t-butyl peracetate, 2,2-bis (t-butyl peroxy) butane, 2,5-bis (t-butylperoxy)-2,5-dimethyl-3-hexyne, 2,5-bis (t-butylperoxy)-2,5-dimethylhexane, bis [(t-butylperoxy-1-methylethy]benzene. The polymerization initiator may be selected depending on the type of the base resin, the acrylate monomer, and the functional monomer.

The polyacrylate polymer resin according to the embodiment may be produced by absorbing an acrylate monomer, a functional monomer, and a polymerization initiator into a base resin containing a polyethylene resin alone or an admixture of a polyamide resin and a polyethylene resin as dispersed in water, followed by polymerization of the monomers. Here, the polyacrylate polymer resin according to the embodiment may be created by dispersing the polyacrylate copolymer of 128 to 905 parts by weight in the base resin of 100 parts by weight.

A method of manufacturing a polyethylene resin composition according to an embodiment will now be described in greater detail.

(First polymerization step)

First of all, water, a base resin, an acrylate monomer, a functional monomer, and a polymerization initiator are added into a reactor having an agitator, a heater, and a cooler, and then the reactor is sealed. Here, the base resin may be in the form of pellets, and the amount of water added may be 500 to 1000 parts by weight with respect to the base resin of 100 parts by weight.

The amount of acrylate monomer may be 50 to 200 parts by weight with respect to the base resin of 100 parts by weight. If the amount of the acrylate monomer added is not less than 50 parts by weight, the acrylate monomer and the functional monomer may be absorbed well into a product at the second or further polymerization step. And, if the amount of the acrylate monomer added is not more than 200 parts by weight, the amount of monomer not absorbed into the base resin is decreased, thus increasing the polymerization yield and reducing the passibility that problems occur in the subsequent processes, such as treatment of waste water.

The amount of the functional monomer may be 0.01 to 15 parts by weight with respect to the base resin of 100 parts by weight. If the amount of the functional monomer added is not less than 0.01 parts by weight, the absorption of the functional monomer into a product at the second or further polymerization step may be improved, and the impact strength enhancement can be achieved by the first step polymer itself and the first step polymer can help the second step or further step polymer be well dispersed in polyamide resin composition. The amount of the functional monomer added being not more than 15 parts by weight may prevent a polymerization reaction from occurring without absorption of the monomers into the base resin or occurring alone in the water.

The amount of the polymerization initiator may be 0.2 to 2.5 mol% with respect to the summed value of the number of moles of the added acrylate monomer, the number of moles of the added functional monomer, and the number of moles of the added polymerization initiator.

If the amount of the polymerization initiator added is not less than 0.2 mol% with respect to the summed value of the number of moles of the monomers and the number of moles of the polymerization initiator, it may sufficiently lead to polymerization of the monomers, thus preventing a large amount of acrylate monomers from being unreacted due to the failure of the first polymerization step or low conversion. Further, if the amount of the polymerization initiator added is not more than 2.5 mol% with respect to the summed value of the number of moles of the monomers and the number of moles of the polymerization initiator, it may prevent very low molecular weight polyacrylate copolymer from being generated, thus drying process is easily done and process control of the first polymerization step could be easy.

Next, while the added components are agitated, a high-pressure nitrogen gas is filled and discharged into/from the sealed reactor to remove oxygen from the reactor. Thereafter, the reactor is heated to an absorption temperature of 45 to 120 degrees C depending on the polymerization initiator as selected so that the acrylate monomer, the functional monomer, and the polymerization initiator are absorbed into the base resin. The absorption step may require 1 to 5 hours depending on the type of the base resin and the acrylate monomer.

After the acrylate monomer, the functional monomer, and the polymerization initiator are absorbed into the base resin pellets, the pellets and water contained in the reactor are agitated and heated to induce the polymerization of monomers. The temperature in the reactor may be adjusted depending on a proper initiation temperature of the polymerization initiator as used. The polymerization reaction of the acrylate monomer, the functional monomer, and the polymerization initiator absorbed in the base resin is occurred in the pellets, thus forming a polyacrylate copolymer.

Two to ten hours of polymerization reaction is required depending on the type of the base resin, the monomers, and the polymerization initiator. After the first polymerization reaction is terminated, the reactor is sufficiently cooled and the reaction mixture is filtered, thus obtaining a first step polymer. The first step polymer is washed with warm water once or more and then dried under the condition suitable for the used base resin and the monomers to completely remove water.

(Second polymerization step)

While the first step polymer, an acrylate monomer, a functional monomer, and a polymerization initiator are put in the reactor, second polymerization step is performed by the same method as the first polymerization step.

The amount of the acrylate monomer may be 50 to 200 parts by weight with respect to the first step polymer of 100 parts by weight. If the amount of the acrylate monomer as added is not less than 50 parts by weight, such a problem that the performance of reinforcing impact strength of polyamide resin composition is deteriorated due to the amount of polyacrylate copolymer being too little despite the content of the functional monomer, and if the amount of the acrylate monomer is not more than 200 parts by weight, it can be possible to prevent a lowering the physical properties such as stiffness of the final polyamide resin composition.

The amount of the functional monomer may be 2 to 35 parts by weight with respect to the first step polymer of 100 parts by weight. If the amount of the functional monomer as added is not less than 2 parts by weight, the performance of reinforcing impact strength of polyamide resin composition is good enough, thus preventing increase of manufacturing cost. And, if the amount of the functional monomer is not more than 35 parts by weight, the modified polyamide resin composition may not have high viscosity, thus the molding condition could be the same as before and the molded part may have good appearance. The physical properties such as stiffness and strength may not be affected.

The amount of the polymerization initiator may be 0.2 to 2.5 mol% with respect to the summed value of the number of moles of the added acrylate monomer, the number of moles of the added functional monomer, and the number of moles of the added polymerization initiator as added upon the second polymerization step. If the amount of the polymerization initiator added is not less than 0.2 mol% with respect to the summed value of the number of moles of the monomers and the number of moles of the polymerization initiator, it may sufficiently lead the monomers to polymerization, thus preventing a large amount of acrylate monomers from being unreacted due to the failure of the second polymerization step or low conversion. Further, if the amount of the polymerization initiator added is not more than 2.5 mol% with respect to the summed value of the number of moles of the monomers and the number of moles of the polymerization initiator, it may prevent very low molecular weight polyacrylate copolymer from being generated, thus drying process is easily done and process control of the second polymerization step could be easy.

When the polymerization reaction is completed, the reactor is sufficiently cooled and the reacted mixture is filtered, thus obtaining pellets. The pellets acquired at the moment are swollen because the acrylate monomer and the functional monomer as absorbed are co-polymerized in the pellets. The pellets are sufficiently dried to remove water completely, thus obtaining a polyacrylate polymer resin.

Although it has been described in the embodiment that the acrylate monomer, the functional monomer, and the polymerization initiator are absorbed in the base resin, followed by the first polymerization step, and then, the acrylate monomer, the functional monomer, and the polymerization initiator are absorbed in the product created by the first polymerization step, followed by the second polymerization step, further polymerization may be carried out after the second polymerization step or polymerization may be conducted only once.

Further, the acrylate monomer and the polymerization initiator may be only absorbed in the base resin for the first polymerization step, and then, the acrylate monomer, the functional monomer, and the polymerization initiator may be absorbed in the product of the first polymerization step, followed by the second step or further polymerization steps. When the functional monomer is added at the stage of the second or further polymerization step, the functional monomer may be well absorbed into the pellets produced by the previous polymerization step.

As an additive in the embodiment, a heat stabilizer, a processing aid, peroxide, a lubricant, and a UV (Ultra Violet) stabilizer may be used. The heat stabilizer may include a hindered phenol-based heat stabilizer, a phosphite-based heat stabilizer, or a mixture thereof. The processing aid and the lubricant may include calcium stearate, zinc stearate, or ethylenebisstearylamide. The peroxide may be used to effectively introduce a maleic anhydride into a branch of the polyethylene resin and polyacrylate copolymer, and include, but not limited to, azobisisobutyronitrile, benzoyl peroxide, Lauroyl Peroxide, t-butyl peroxide, dicumyl peroxide, t-butyl peracetate, 2,2-bis (t-butyl peroxy) butane, 2,5-bis (t-butylperoxy)-2,5-dimethyl-3-hexyne, 2,5-bis (t-butylperoxy)-2,5-dimethylhexane, bis [(t-butylperoxy)-1-methytethyl]benzene. The UV stabilizer may include a benzotriazole-based UV stabilizer, or a HALS-based UV stabilizer.

The polyacrylate polymer resin obtained by the above method is blended with polyethylene resin, maleic anhydride and additives such as a heat stabilizer, subjected to a reactive extrusion process by using a processing machines, such as a continuous mixer, a kneader, or a twin screw extruder, and made in the form of pellets, thus obtaining a polyethylene resin composition.

Hereinafter, exemplary embodiments of the present invention will be described in greater detail.

Experiment 1: Production of Polyacrylate Polymer Resin

[Experimental Example 1] Polyacrylate polymer resin A

First polymerization step

Base resin pellets of 600g, n-butyl acrylate of 360g, 2-ethylhexyl acrylate of 195g, a methacrylic acid of 45g, lauroyl peroxide of 10.9g, and water of 4.5kg were added in a 5L reactor with a agitator and a heater, and then the reactor was sealed. Poly (ethylene-co-butyl acrylate), which is a polyethylene co-polymer commercially available from DuPont and has a melt index of 4g/10 minutes, was used as the base resin. While the reaction mixture was agitated, a high pressure of nitrogen gas is filled/discharged into/from the sealed reactor to remove oxygen. This process was repeated three times to lower the concentration of oxygen in the reactor. Thereafter, the reactor was heated to 55°C and n-butyl acrylate was absorbed into the polyethylene co-polymer pellets for two hours. The reactor was heated to 60°C and agitated for one hour so that the added monomers may be completely absorbed. For the monomers to be subjected to a polymerization reaction, the reactor was heated to 65°C and agitated for one hour and then heated to 70°C and agitated for one hour. Taking care of the heat generated during the polymerization reaction, the reactor was heated to 75°C and maintained at the temperature for one hour. The pellets obtained by the reaction were dried at 85°C in a forced convection oven for six hours.

Second polymerization step

Subsequently, the pellets of 600g, as obtained in the first polymerization step, n-butyl acrylate of 150g, 2-ethylhexyl acrylate of 540g, a methacrylic acid of 60g, lauroyl peroxide of 10.9g, and water of 4.0kg were added in a 5L reactor with a agitator and a heater, and then the reactor was sealed. While the reaction mixture was agitated, a high pressure of nitrogen gas is filled/discharged into/from the sealed reactor to remove oxygen. This process was repeated three times to lower the concentration of oxygen in the reactor. Thereafter, the reactor was heated to 55°C and the monomers were absorbed into the pellets for two hours. The reactor was heated to 60°C and agitated for two hours so that the added monomers may be completely absorbed. For the monomers to be subjected to a polymerization reaction, the reactor was heated to 65°C and agitated for one hour and then heated to 70°C and agitated for two hours. Taking care of the heat generated during the polymerization reaction, the reactor was heated to 75°C or more and maintained at the temperature for one hour. The pellets obtained by the reaction were filtered, washed two times, and dried at 80°C in a forced convection oven for six hours, thus obtaining a polyacrylate polymer resin A in which the polyacrylate co-polymer is dispersed in the base resin.

[Experimental Example 2] Polyacrylate polymer resin B

First polymerization step

A first step polymer was obtained in the same method as Experimental Example 1.

Second polymerization step

A polyacrylate polymer resin B was obtained in the same method as Experimental Example 1 except for using n-butyl acrylate of 210g, 2-ethylhexyl acrylate of 480g, a methacrylic acid of 60g, and lauroyl peroxide of 11.2g.

[Experimental Example 3] Polyacrylate polymer resin C

First polymerization step

A first step polymer was obtained in the same method as Experimental Example 1.

Second polymerization step

A polyacrylate polymer resin C was obtained in the same method as Experimental Example 1 except for using n-butyl acrylate of 135g, 2-ethylhexyl acrylate of 540g, a methacrylic acid of 75g, and lauroyl peroxide of 11.1g.

[Experimental Example 4] Polyacrylate polymer resin D

First polymerization step

A first step polymer was obtained in the same method as Experimental Example 1.

Second polymerization step

A polyacrylate polymer resin D was obtained in the same method as Experimental Example 1 except for using n-butyl acrylate of 120g, 2-ethylhexyl acrylate of 540g, a methacrylic acid of 90g, and lauroyl peroxide of 11.2g.

[Experimental Example 5] Polyacrylate polymer resin E

First polymerization step

A first step polymer was obtained in the same method as Experimental Example 1.

Second polymerization step

A polyacrylate polymer resin E was obtained in the same method as Experimental Example 1 except for using n-butyl acrylate of 150g, 2-ethylhexyl acrylate of 555g, a methacrylic acid of 45g, and lauroyl peroxide of 10.7g.

[Experimental Example 6] Polyacrylate polymer resin F

First polymerization step

A first step polymer was obtained in the same method as Experimental Example 1.

Second polymerization step

A polyacrylate polymer resin F was obtained in the same method as Experimental Example 1 except for using n-butyl acrylate, of 90g, 2-ethylhexyl acrylate of 540g, a methacrylic acid of 120g, and lauroyl peroxide of 11.4g.

[Experimental Example 7] Polyacrylate polymer resin G

First polymerization step

A first step polymer was obtained in the same method as Experimental Example 1 except for using n-butyl acrylate of 450g, 2-ethylhexyl acrylate of 135g, and a methacrylic acid of 15g.

Second polymerization step

A polyacrylate polymer resin G was obtained in the same method as Experimental Example 1 except for using n-butyl acrylate of 180g, 2-ethylhexyl acrylate of 555g, a methacrylic acid of 15g, and lauroyl peroxide of 10.5g.

Experiment 2: Production and Performance Evaluation of Modified Polyethylene Resin Composition

[Experimental Example 8]

The polyacrylate polymer resin A of 3.0kg, as obtained in Experimental Example 1, poly (ethylene-co-1-octene (melt index: 0.5g/10minutes (190°C, 2.16kg), specific gravity: 0.87) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.3kg as obtained and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 9]

The modified polyethylene resin of 1.5kg as obtained in Experimental Example 8 and a nylon 6 resin of 8.5kg as commercially available from BASF were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 10]

The polyacrylate polymer resin B of 3.0kg, as obtained in Experimental Example 2, poly (ethylene-co-1-octene (melt index: 0.5g/10minutes (190°C, 2.16kg), specific gravity: 0.87) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.3kg as obtained and a nylon resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 11]

The polyacrylate polymer resin C of 3.0kg, as obtained in Experimental Example 3, poly (ethylene-co-1-octene (melt index: 0.5g/10minutes (190°C, 2.16kg), specific gravity: 0.87) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.3kg as obtained and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 12]

The polyacrylate polymer resin A of 4.0kg, as obtained in Experimental Example 1, poly (ethylene-co-1-octene (melt index: 0.5g/10minutes (190°C, 2.16kg), specific gravity: 0.87) of 6.0kg, a maleic anhydride of 100g, and heat stabilizer and peroxide of 20g were mixed well and subjected to a reactive extrusion process using a twin screw extruder (51mm, L/D=40).

The modified polyethylene resin of 1.5kg as obtained and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 13]

The polyacrylate polymer resin A of 5.0kg, as obtained in Experimental Example 1, poly (ethylene-co-1-octene (melt index: 0.5g/10minutes (190°C, 2.16kg), specific gravity: 0.87) of 5.0kg, a maleic anhydride of 100g, and heat stabilizer and peroxide of 20g were mixed well and subjected to a reactive extrusion process using a twin screw extruder (51mm, L/D=40).

The modified polyethylene resin of 1.5kg as obtained and a nylon 6 resin, for example. ULTRAMID B27 commercially available from BASF, of 8.5kg were melt-blended by using a twin screw extruder (51 mm, L/D=40). The modified nylon 6 resin as acquired was injection molded according to ASTM D 638 and ASTM D 256, thus obtaining a specimen, and physical properties of the specimen were evaluated.

[Experimental Example 14]

The polyacrylate polymer resin A of 3.0kg, as obtained in Experimental Example 1, poly (ethylene-co-1-octene (melt index: 0.5g/10mmutes (190°C, 2.16kg), specific gravity: 0.87) of 7.0kg, a maleic anhydride of 75g, and heat stabilizer and peroxide of 20g were mixed well and subjected to a reactive extrusion process using a twin screw extruder (51mm, L/D=40).

The modified polyethylene resin of 1.5kg as obtained and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 15]

The polyacrylate polymer resin A of 3.0kg, as obtained in Experimental Example 1, poly (ethylene-co-1-octene (melt index: 0.5g/10minutes (190°C, 2.16kg), specific gravity: 0.87) of 7.0kg, a maleic anhydride of 125g, and heat stabilizer and peroxide of 20g were mixed well and subjected to a reactive extrusion process using a twin screw extruder (51mm, L/D=40).

The modified polyethylene resin of 1.5kg as obtained and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 16]

The polyacrylate polymer resin A of 3.0kg, as obtained in Experimental Example 1, poly (ethylene-co-1-octene (melt index: 0.5g/10minutes (190°C, 2.16kg), specific gravity: 0.87) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.3kg as obtained and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 17]

The polyacrylate polymer resin A of 3.0kg, as obtained in Experimental Example 1, poly (ethylene-co-1-octene (melt index: 0.5g/10minutes (190°C, 2.16kg), specific gravity: 0.87) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.3kg as obtained and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 18]

The polyacrylate polymer resin A of 3.0kg, as obtained in Experimental Example 1, poly (ethylene-co-propylene (melt index: 0.3g/10minutes (190°C, 2.16kg), specific gravity: 0.86) of 2.0kg, poly (ethylene-co-1-octene (melt index: 1.0g/10minutes (190°C, 2.16kg), specific gravity: 0.86) of 5.0kg, a maleic anhydride of 100g, and heat stabilizer and peroxide of 20g were mixed well and subjected to a reactive extrusion process using a twin screw extruder (51mm, L/D=40).

The modified polyethylene resin of 1.5kg as obtained and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 19]

The polyacrylate polymer resin D of 3.0kg, as obtained in Experimental Example 4, poly (ethylene-co-1-octene (melt index: 0.5g/10minutes (190°C. 2.16kg), specific gravity: 0.86) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.25kg as obtained and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 20]

The polyacrylate polymer resin E of 3.0kg, as obtained in Experimental Example 5, poly (ethylene-co-1-octene (melt index: 0.5g/10minutes (190°C, 2.16kg), specific gravity: 0.86) of 7.0kg, a maleic anhydride of 50g, and heat stabilizer and peroxide of 20g were mixed well and subjected to a reactive extrusion process using a twin screw extruder (51mm, L/D=40).

The modified polyethylene resin of 1.25kg as obtained and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 21]

The polyacrylate polymer resin E of 3.0kg, as obtained in Experimental Example 5, poly (ethylene-co-1-octene (melt index: 0.5g/10minutes (190°C, 2.16kg), specific gravity: 0.86) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.25kg as obtained and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 22]

The polyacrylate polymer resin E of 3.0kg, as obtained in Experimental Example 5, poly (ethylene-co-1-octene (melt index: 0.5g/10minutes (190°C, 2.16kg), specific gravity: 0.86) of 7.0kg, a maleic anhyfride of 150g, and heat stabilizer and peroxide of 20g were mixed well and subjected to a reactive extrusion process using a twin screw extruder (51mm, L/D=40).

The modified polyethylene resin of 1.25kg as obtained and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 23]

The polyacrylate polymer resin F of 3.0kg, as obtained in Experimental Example 6, poly (ethylene-co-1-octene (melt index: 0.5g/10minutes (190°C, 2.16kg), specific gravity: 0.86) of 7.0kg, a maleic anhydride of 100g, and heat stabilizer and peroxide of 20g were mixed well and subjected to a reactive extrusion process using a twin screw extruder (51mm, L/D=40).

The modified polyethylene resin of 1.25kg as obtained and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 256, thus obtaining a specimen, and physical properties of the specimen were evaluated.

[Experimental Example 24]

The polyacrylate polymer resin E of 3.0kg, as obtained in Experimental Example 5, poly (ethylene-co-propylene (melt index: 0.3g/10minutes (190°C. 2.16kg), specific gravity: 0.86) of 2.0kg, poly (ethylene-co-1-octene (melt index: 1.0g/10minutes (190°C, 2.16kg), specific gravity: 0.86) of 5.0kg, a maleic anhydride of 100g, and heat stabilizer and peroxide of 20g were mixed well and subjected to a reactive extrusion process using a twin screw extruder (51 mm, L/D=40).

The modified polyethylene resin of 1.25kg as obtained and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 25]

The polyacrylate polymer resin G of 0.5kg, as obtained in Experimental Example 7, poly (ethylene-co-1-octene (melt index: 5.0g/10minutes (190°C, 2.16kg), specific gravity: 0.87) of 6.0kg, poly (ethylene-co-1-octene (melt index: 1.0g/10minutes (190°C, 2.16kg), specific gravity: 0.87) of 3.5kg, a maleic anhydride of 50g, and heat stabilizer and peroxide of 20g were mixed well and subjected to a reactive extrusion process using a twin screw extruder (51mm, L/D=40).

The modified polyethylene resin of 1.25kg as obtained and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 26]

The polyacrylate polymer resin A of 3.0kg, as obtained in Experimental Example 1 and poly (ethylene-co-1-octene) of 7.0kg, as obtained by introducing a maleic anhydride into a branch, for example, FUSABOND MN493D commercially available from DuPont, were uniformly mixed with a small mixer.

The mixed pellets of 1.3kg and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 27]

The polyacrylate polymer resin A of 3.0kg, as obtained in Experimental Example 1 and poly (ethylene-co-1-octene) of 7.0kg, as obtained by introducing a maleic anhydride into a branch, for example, FUSABOND MN493D commercially available from DuPont, were uniformly mixed with a small mixer.

The mixed pellets of 1.5kg and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 28]

The polyacrylate polymer resin A of 3.0kg, as obtained in Experimental Example 1, and poly (ethylene-co-1-octene) of 7.0kg, as obtained by introducing a maleic anhydride into a branch, for example, FUSABOND MN493D commercially available from DuPont, were melt-blended by using a twin screw extruder (51 mm, L/D=40).

The obtained resin of 1.5kg and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 29]

The polyacrylate polymer resin B of 5.0kg, as obtained in Experimental Example 2 and poly (ethylene-co-1-octene) of 5.0kg, as obtained by introducing a maleic anhydride into a branch, for example, FUSABOND MN493D commercially available from DuPont, were uniformly mixed with a small mixer.

The mixed pellets of 1.5kg and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Experimental Example 30]

The polyacrylate polymer resin A of 3.0kg, as obtained in Experimental Example 1, and poly (ethylene-co-1-octene) of 7.0kg, as obtained by introducing a maleic anhydride into a branch, for example, FUSABOND MN493D commercially available from DuPont, were melt-blended by using a twin screw extruder (5 1 mm, L/D=40).

The obtained resin of 1.3kg and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

Physical properties of the modified nylon 6 resin as produced in Experimental Examples 8 to 30 are showed in Table 1.

**[Table 1]**

| Experimental Example | Modified polyethylene resin (wt%) | Nylon 6 resin (wt%) | Tensile strength (MPa) | Notched izod Impact strength (room temperature, 3.2mm, kgf-cm/cm) | Notched izod Impact strength (room temperature, 6.4mm, kgf-cm/cm) | MI (235 degree C, 2.16kg) |
|---|---|---|---|---|---|---|
| 8 | 13.0 | 87.0 | 60.0 | 74.1 | 72.3 | 17.4 |
| 9 | 15.0 | 85.0 | 58.9 | 85.0 | 78.8 | 10.9 |
| 10 | 13.0 | 87.0 | 61.5 | 69.7 | 67.2 | 11.7 |
| 11 | 13.0 | 87.0 | 62.3 | 83.9 | 62.8 | 12.0 |
| 12 | 15.0 | 85.0 | 60.7 | 82.2 | 69.9 | 10.1 |
| 13 | 15.0 | 85.0 | 60.0 | 77.9 | 74.8 | 8.9 |
| 14 | 15.0 | 85.0 | 58.6 | 92.2 | 81.9 | 12.5 |
| 15 | 15.0 | 85.0 | 58.0 | 98.8 | 84.6 | 10.1 |
| 16 | 13.0 | 87.0 | - | 70.8 | 63.8 | 14.4 |
| 17 | 13.0 | 87.0 | - | 69.8 | 61.7 | 14.6 |
| 18 | 13.0 | 87.0 | - | 72.2 | 63.1 | 14.6 |
| 19 | 12.5 | 87.5 | - | 81.0 | 70.6 | 9.8 |
| 20 | 12.5 | 87.5 | - | 71.5 | 77.9 | 10.7 |
| 21 | 12.5 | 87.5 | - | 76.8 | 77.3 | 10.2 |
| 22 | 12.5 | 87.5 | - | 65.8 | 69.0 | 9.3 |
| 23 | 12.5 | 87.5 | - | 87.4 | 70.9 | 6.5 |
| 24 | 12.5 | 87.5 | 59.4 | 68.8 | 61.0 | 8.2 |
| 25 | 12.5 | 87.5 | 53.8 | 64.4 | 41.7 | 13.2 |
| 26 | 13.0 | 87.0 | 52.8 | 92.8 | 74.2 | 14.2 |
| 27 | 15.0 | 85.0 | 53.3 | 89.0 | 84.0 | 11.6 |
| 28 | 15.0 | 85.0 | 57.0 | 84.6 | 78.9 | 11.0 |
| 29 | 15.0 | 85.0 | 51.4 | 96.4 | 89.8 | 10.3 |
| 30 | 13.0 | 87.0 | 61.5 | 74.7 | 53.0 | 14.5 |

[Comparative Example 1]

Poly (ethylene-co-methyl acrylate) of 3.0kg, for example, ELVALOY 1224AC commercially available from DuPont, poly (ethylene-co-1-octene (melt index: 0.5g/10minutes (190°C, 2.16kg), specific gravity: 0.87) of 7.0kg were melt-blended by using a twin screw extruder (51mm, L/D=40).

The obtained polyethylene resin of 1.3kg and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 2]

Poly (ethylene-co-1-octene) of 1.25kg, as obtained by introducing a maleic anhydride into a branch, for example, FUSABOND MN493D commercially available from DuPont, and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 3]

Poly (ethylene-co-1-octene) of 1.3kg, as obtained by introducing a maleic anhydride into a branch, for example, FUSABOND MN493D commercially available from DuPont, and a nylon 6 resin, for example, ULTRAMID B27 commercially available from BASF, of 8.7kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 4]

Poly (ethylene-co-1-octene) of 1.5kg, as obtained by introducing a maleic anhydride into a branch, for example, FUSABOND MN493D commercially available from DuPont, and a nylon 6 resin, for example, ULTRAMID B27 commercially available from BASF, of 8.5kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 5]

Poly (ethylene-co-1-octene) of 1.25kg, as obtained by introducing a maleic anhydride into a branch, for example, EXXELOR VA1803 commercially available from ExxonMobil, and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 6]

Poly (ethylene-co-propylene) of 1.25kg, as obtained by introducing a maleic anhydride into a branch, for example, FUSABOND MF 416D commercially available from DuPont, and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 7]

The polyacrylate polymer resin A of 1.25kg, as obtained in Experimental Example 1 and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

[Comparative Example 8]

The polyacrylate polymer resin E of 1.25kg, as obtained in Experimental Example 5 and a nylon 6 resin, for example, ULTRAMID B27 commercially available from BASF, of 8.75kg were melt-blended by using a twin screw extruder (51mm, L/D=40). The modified nylon 6 resin as acquired was injection molded according to ASTM D 638 and ASTM D 256, thus obtaining a specimen, and physical properties of the specimen were evaluated.

Physical properties of the modified nylon 6 resin as produced in Comparative Examples 1 to 8 are showed in Table 2.

**[Table 2]**

| Comparative Example | Modified polyethylene resin (wt%) | Nylon 6 resin (wt%) | Tensile strength (MPa) | Notched izod Impact strength (room temperature, 3.2mm. kgf-cm/cm) | Notched izod Impact strength (room temperature, 6.4mm. kgf-cm/cm) | MI (235 degree C. 2.16kg) |
|---|---|---|---|---|---|---|
| 1 | 13.0 | 87.0 | - | 50.4 | 23.9 | 23.1 |
| 2 | 12.5 | 87.5 | 55.8 | 60.9 | 26.1 | 12.2 |
| 3 | 13.0 | 87.0 | 59.6 | 66.9 | 26.0 | 11.5 |
| 4 | 15.0 | 85.0 | 54.2 | 77.6 | 58.3 | 8.9 |
| 5 | 12.5 | 87.5 | 53.9 | 23.4 | 18.8 | 14.0 |
| 6 | 12.5 | 87.5 | 59.3 | 29.6 | 19.4 | 13.8 |
| 7 | 12.5^{a} | 87.5 | 53.1 | 101.4 | 74.3 | 1.8 |
| 8 | 12.5^{a} | 87.5 | 66.2 | 76.0 | 63.2 | 2.7 |

| | | | | | | |
|---|---|---|---|---|---|---|
| a: in case of adding polyacrylate polymer resin alone. | | | | | | |

Referring to Table 1, it can be seen that the polyamide resin compositions containing the polyethylene resin composition produced according to Experimental Examples I to 30 of the present invention are even more excellent in mechanical strength, i.e., impact strength and flowability (MI) than those according to Comparative Examples 1 to 8 in Table 2.

In particular, according to Comparative Examples 7 and 8, the polyamide resin composition produced by adding the polyacrylate polymer resin alone has the similar impact strength as the polyamide resin composition produced by using the polyethylene resin composition as represented in Experimental Examples, but its viscosity becomes excessively high, thus deteriorating processability.

Processability of a material is currently considered as one of main features of engineering plastics. Accordingly, if engineering plastic has bad processability, its applicable area cannot but be narrowed even though it has good physical properties. Here, the "processability" of engineering plastic may refer to the flowability (MI) of a resin, and appropriate flowability may lead to applicable areas being expanded. Further, flowability of a material is closely associated with cost saving and productivity. If a material with low flowability is used, processing temperature and pressure should be raised to enhance processability, and this gives rise to increase in costs, difficulties in process, and damage to material itself due to the heat. The consequence is lower productivity.

Accordingly, the present invention provides a polyethylene resin composition whose performance for enhancing impact strength of polyamide resin is good and flowability is not excessively low, i.e., excellent in processability.

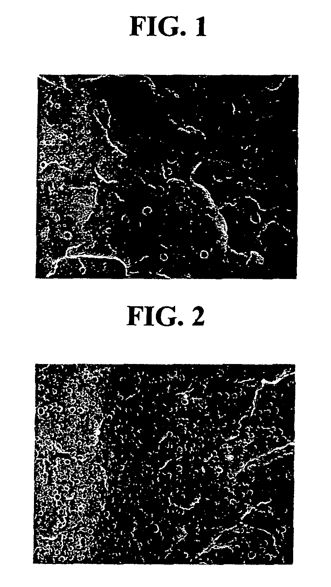

Fig. 1 is an expanded view illustrating a polyamide resin composition produced according to Comparative Example 2, and Fig. 2 is an expanded view illustrating a polyamide resin composition produced according to Experimental Example 21 (magnified to 3,000 times by an scanning electron microscope)

As shown in Figs. 1 and 2, it can be seen that a modified polyethylene resin according to the present invention is very uniformly distributed in a polyamide resin composition. This shows that adding a polyacrylate polymer resin enhanced miscibility and compatibility between polyethylene resin and polyamide resin.

Accordingly, it can be seen that the polyethylene resin composition according to the present invention has very excellent effect of enhancing impact strength and provide excellent processability, i.e., flowability with respect to polyamide resin composition in comparison with the conventional polyethylene resin composition.

## Claims

1. A polyethylene resin composition comprising:
a base resin containing a polyethylene resin alone or an admixture of a polyamide resin and a polyethylene resin;
a polyacrylate copolymer obtained by absorbing an acrylate monomer, a functional monomer which is any one selected from an acrylic acid, a methacrylic acid, and a mixture of an acrylic acid and a methacrylic acid, and a polymerization initiator into the base resin, followed by polymerization; and
a maleic anhydride introduced in a branch of the base resin and the polyacrylate copolymer by a chemical reaction, wherein the polyacrylate copolymer of 1.1 to 96.6 parts by weight is dispersed in the base resin of 100 parts by weight.

2. The polyethylene resin composition of claim 1, wherein the polyethylene resin is a polyethylene copolymer or a homo-polymer of ethylene, a polyethylene resin in which a functional group is introduced in a branch by chemical bonding, or an admixture thereof.

3. The polyethylene resin composition of claim 2, wherein the polyethylene resin in which a functional group is introduced in a branch by chemical bonding is poly (ethylene-co-methyl acrylate), poly (ethylene-co-ethyl acrylate), poly (ethylene-co-butyl acrylate), poly (ethylene-co-acrylic acid), poly (ethylene-co-methacrylic acid), poly (ethylene-co-glycidyl methacrylate), poly (ethylene-co-maleic acid), poly (ethylene-co-vinyl acetate), poly (ethylene-co-acrylamide), and poly (ethylene-co-acrylonitrile), or an admixture of two or more thereof.

4. The polyethylene resin composition of claim 2, wherein the polyethylene copolymer is a copolymer of ethylene and α-olefin.

5. The polyethylene resin composition of claim 4, wherein the copolymer of ethylene and α-olefin is poly (ethylene-co-1-octene), poly (ethylene-co-1-butene), poly (ethylene-co-propylene), poly (ethylene-co-propylene-co-diene) or an admixture of two or more thereof.

6. The polyethylene resin composition of claim 1, wherein the acrylate monomer is an alkyl acrylate monomer, alkyl methacrylate monomer, or a mixture thereof.

7. The polyethylene resin composition of claim 1, wherein the polyacrylate copolymer is formed by absorbing an acrylate monomer and a polymerization initiator into a base resin containing a polyethylene resin alone dispersed in water or an admixture of a polyamide resin and a polyethylene resin, performing first polymerization step on the monomer, absorbing an acrylate monomer, a functional monomer, and a polymerization initiator into a product created by the first polymerization step, and then performing second step or more polymerization on the monomers.

8. The polyethylene resin composition of claim 7, wherein the polyacrylate copolymer is formed by absorbing an acrylate monomer, a functional monomer, and a polymerization initiator into a base resin containing a polyethylene resin alone dispersed in water or an admixture of a polyamide resin and a polyethylene resin, performing first polymerization step on the monomer, absorbing an acrylate monomer, a functional monomer, and a polymerization initiator into a product created by the first polymerization step, and then performing second step or more polymerization on the monomers.

9. The polyethylene resin composition of claim 7 or 8, wherein the amount of the acrylate monomer is 50 to 200 parts by weight with respect to the base resin or the product created by the first polymerization step of 100 parts by weight.

10. The polyethylene resin composition of claim 7 or 8, wherein the amount of the functional monomer is 0.01 to 15 parts by weight with respect to the base resin of 100 parts by weight upon the first polymerization step, and 2 to 35 parts by weight with respect to the product created by the first polymerization step of 100 parts by weight upon the second step or more polymerization.

11. The polyethylene resin composition of claim 7 or 8, wherein the amount of the polymerization initiator is 0.2 to 2.5 mol% with respect to the summed value of the number of moles of the monomers and the polymerization initiator.

12. The polyethylene resin composition of claim 7, wherein the polyethylene resin composition is formed by mixing a polyethylene resin, a maleic anhydride, a heat stabilizer, and peroxide with the polyacrylate copolymer as polymerized at second step or more and performing an extrusion process on a resultant material.

13. The polyethylene resin composition of claim 1, wherein the amount of the maleic anhydride is 0.1 to 2.5 parts by weight with respect to the base resin of 100 parts by weight.

## Patentansprüche

1. Eine Polyethylenharz-Zusammensetzung umfassend:
ein Basisharz, enthaltend ein Polyethylenharz allein oder eine Mischung aus einem Polyamidharz und einem Polyethylenharz;
ein Polyacrylat-Copolymer, erhalten durch Absorption eines Acrylatmonomers, eines funktionalen Monomers, welches ausgewählt ist aus einer Acrylsäure, einer Methacrylsäure, und einer Mischung aus einer Acrylsäure und einer Methacrylsäure, und eines Polymerisationsinitiators in das Basisharz, gefolgt von der Polymerisation; und
ein Maleinsäureanhydrid, eingeführt in einen Ast des Basisharzes und des Polyacrylat-Copolymers durch eine chemische Reaktion, wobei das Polyacrylat-Copolymer von 1,1 bis 96,6 Gewichtsteilen in dem Basisharz von 100 Gewichtsteilen dispergiert ist.

2. Die Polyethylenharz-Zusammensetzung nach Anspruch 1, wobei das Polyethylenharz ein Polyethylen-Copolymer oder ein Homo-Polymer von Ethylen, ein Polyethylenharz, bei welchem eine funktionale Gruppe durch chemische Bindung in einen Ast eingeführt ist, oder eine Mischung davon, ist.

3. Die Polyethylenharz-Zusammensetzung nach Anspruch 2, wobei das Polyethylenharz, bei welchem eine funktionale Gruppe in einen Ast durch chemische Bindung eingeführt ist, Poly(ethylen-co-methylacrylat), Poly(ethylen-co-ethylacrylat), Poly(ethylen-co-butylacrylat), Poly(ethylen-co-acrylsäure), Poly(ethylen-co-methacrylsäure), Poly(ethylen-co-glycidylmethacrylat), Poly(ethylen-co-maleinsäure), Poly(ethylen-co-vinylacetat), Poly(ethylen-co-acrylamid), und Poly(ethylen-co-acrylonitril), oder eine Mischung von zwei oder mehr derselben ist.

4. Die Polyethylenharz-Zusammensetzung nach Anspruch 2, wobei das Polyethylen-Copolymer ein Copolymer von Ethylen und α-Olefin ist.

5. Die Polyethylenharz-Zusammensetzung nach Anspruch 4, wobei das Copolymer von Ethylen und α-Olefin Poly(ethylen-co-1-octen), Poly(ethylen-co-1-buten), Poly(ethylen-co-propylen), Poly(ethylen-co-propylen-co-dien) oder eine Mischung von zwei oder mehr derselben ist.

6. Die Polyethylenharz-Zusammensetzung nach Anspruch 1, wobei das Acrylatmonomer ein Alkylacrylatmonomer, Alkylmethacrylatmonomer oder eine Mischung davon ist.

7. Die Polyethylenharz-Zusammensetzung nach Anspruch 1, wobei das Polyacrylat-Copolymer gebildet wird durch Absorption eines Acrylatmonomers und eines Polymerisationsinitiators in ein Basisharz, enthaltend ein Polyethylenharz allein dispergiert in Wasser oder enthaltend eine Mischung von einem Polyamidharz und einem Polyethylenharz, wobei zuerst der Polymerisationsschritt auf dem Monomer ausgeführt wird, wobei ein Acrylatmonomer, ein funktionales Monomer und ein Polymerisationsinitiator in ein Produkt absorbiert wird, das durch den ersten Polymerisationsschritt hergestellt wurde, und wobei dann ein zweiter Schritt oder weitere Polymerisation auf den Monomeren ausgeführt wird.

8. Die Polyethylenharz-Zusammensetzung nach Anspruch 7, wobei das Polyacrylat-Copolymer gebildet wird durch Absorption eines Acrylatmonomers, eines funktionalen Monomers und eines Polymerisationsinitiators in ein Basisharz, enthaltend ein Polyethylenharz allein dispergiert in Wasser oder enthaltend eine Mischung von einem Polyamidharz und einem Polyethylenharz, wobei zuerst ein Polymerisationsschritt auf dem Monomer ausgeführt wird, wobei ein Acrylatmonomer, ein funktionales Monomer und ein Polymerisationsinitiator in ein Produkt absorbiert wird, das durch den ersten Polymerisationsschritt hergestellt wurde, und wobei dann ein zweiter Schritt oder weitere Polymerisation auf den Monomeren ausgeführt wird.

9. Die Polyethylenharz-Zusammensetzung nach Anspruch 7 oder 8, wobei die Menge des Acrylatmonomers von 50 bis 200 Gewichtsteilen in Bezug auf das Basisharz oder das Produkt, das durch den ersten Polymerisationsschritt hergestellt wurde von 100 Gewichtsteilen.

10. Die Polyethylenharz-Zusammensetzung nach Anspruch 7 oder 8, wobei die Menge des funktionalen Monomers von 0,01 bis 15 Gewichtsteilen mit Bezug auf das Basisharz von 100 Gewichtsteilen nach dem ersten Polymerisationsschritt, und 2 bis 35 Gewichtsteilen mit Bezug auf das Produkt, das nach dem ersten Polymerisationsschritt hergestellt wurde von 100 Gewichtsteilen nach dem zweiten Schritt oder weiterer Polymerisation.

11. Die Polyethylenharz-Zusammensetzung nach Anspruch 7 oder 8, wobei die Menge des Polymerisationsinitiators von 0,2 bis 2,5 mol% in Bezug auf den aufsummierten Wert der Anzahl der Mole der Monomere und des Polymerisationsinitiators ist.

12. Die Polyethylenharz-Zusammensetzung nach Anspruch 7, wobei die Polyethylenharz-Zusammensetzung gebildet wird durch Mischung eines Polyethylenharzes, eines Maleinsäureanhydrids, eines Hitzestabilisators und von Peroxid mit dem Polyacrylat-Copolymer, wie polymerisiert beim zweiten Schritt oder mehr und Ausführen eines Extrusionsverfahrens auf einem erhaltenen Material.

13. Die Polyethylenharz-Zusammensetzung nach Anspruch 1, wobei die Menge des Maleinsäureanhydrids 0,1 bis 2,5 Gewichtsteile in Bezug auf das Basisharz von 100 Gewichtsteilen ist.

## Revendications

1. Composition de résine de polyéthylène comprenant :
une résine de base contenant une résine de polyéthylène seule ou un mélange d'une résine de polyamide et d'une résine de polyéthylène ;
un copolymère de polyacrylate obtenu par absorption d'un monomère acrylate, d'un monomère fonctionnel qui est l'un quelconque choisi parmi l'acide acrylique, l'acide méthacrylique et un mélange d'acide acrylique et d'acide méthacrylique et d'un initiateur de polymérisation dans la résine de base, suivie d'une polymérisation ; et
un anhydride maléique introduit dans une ramification de la résine de base et dans le copolymère de polyacrylate par une réaction chimique, dans laquelle le copolymère de polyacrylate à raison de 1,1 à 96,6 parties en poids est dispersé dans la résine de base à raison de 100 parties en poids.

2. Composition de résine de polyéthylène selon la revendication 1, dans laquelle la résine de polyéthylène est un copolymère de polyéthylène ou un homopolymère d'éthylène, une résine de polyéthylène dans laquelle un groupe fonctionnel est introduit dans une ramification par une liaison chimique, ou un mélange de ceux-ci.

3. Composition de résine de polyéthylène selon la revendication 2, dans laquelle la résine de polyéthylène dans laquelle un groupe fonctionnel est introduit dans une ramification par liaison chimique est un poly(éthylène-co-acrylate de méthyle), un poly(éthylène-co-acrylate d'éthyle), un poly(éthylène-co-acrylate de butyle), un poly(éthylène-co-acide acrylique), un poly(éthylène-co-acide méthacrylique), un poly(éthylène-co-méthacrylate de glycidyle), un poly(éthylène-co-acide maléique), un poly(éthylène-co-acétate de vinyle), un poly(éthylène-co-acrylamide), un poly(éthylène-co-acrylonitrile), ou un mélange de deux d'entre eux ou plus.

4. Composition de résine de polyéthylène selon la revendication 2, dans laquelle le copolymère de polyéthylène est un copolymère d'éthylène et d'une α-oléfine.

5. Composition de résine de polyéthylène selon la revendication 4, dans laquelle le copolymère d'éthylène et d'une α-oléfine est le poly(éthylène-co-1-octène), le poly(éthylène-co-1-butène), le poly(éthylène-co-propylène), le poly(éthylène-co-propylène-co-diène) ou un mélange de deux d'entre eux ou plus.

6. Composition de résine de polyéthylène selon la revendication 1, dans laquelle le monomère acrylate est un monomère acrylate d'alkyle, un monomère méthacrylate d'alkyle ou un mélange de ceux-ci.

7. Composition de résine de polyéthylène selon la revendication 1, dans laquelle le copolymère de polyacrylate est formé par adsorption d'un monomère acrylate et d'un initiateur de polymérisation dans une résine de base contenant une résine de polyéthylène seule dispersée dans de l'eau ou un mélange d'une résine de polyamide et d'une résine de polyéthylène, par réalisation d'une première étape de polymérisation du monomère, par absorption d'un monomère acrylate, d'un monomère fonctionnel et d'un initiateur de polymérisation dans un produit généré par la première étape de polymérisation et ensuite par réalisation d'une seconde étape ou plus de polymérisation des monomères.

8. Composition de résine de polyéthylène selon la revendication 7, dans laquelle le copolymère de polyacrylate est formé par adsorption d'un monomère acrylate, d'un monomère fonctionnel et d'un initiateur de polymérisation dans une résine de base contenant une résine de polyéthylène seule dispersée dans de l'eau ou un mélange d'une résine de polyamide et d'une résine de polyéthylène, par réalisation d'une première étape de polymérisation du monomère, par absorption d'un monomère acrylate, d'un monomère fonctionnel et d'un initiateur de polymérisation dans un produit généré par la première étape de polymérisation et ensuite par réalisation d'une seconde étape ou plus de polymérisation des monomères.

9. Composition de résine de polyéthylène selon la revendication 7 ou 8, dans laquelle la quantité de monomère acrylate est de 50 à 200 parties en poids, par rapport à la résine de base ou au produit généré par la première étape de polymérisation à raison de 100 parties en poids.

10. Composition de résine de polyéthylène selon la revendication 7 ou 8, dans laquelle la quantité de fonctionnel est de 0,01 à 15 parties en poids, par rapport à la résine de base à raison de 100 parties en poids à la suite de la première étape de polymérisation et de 2 à 35 parties en poids par rapport au produit généré par la première étape de polymérisation à raison de 100 parties en poids à la suite de la seconde étape ou plus de polymérisation.

11. Composition de résine de polyéthylène selon la revendication 7 ou 8, dans laquelle la quantité d'initiateur de polymérisation est de 0,2 à 2,5 % en moles, par rapport à la somme du nombre de moles des monomères et de l'initiateur de polymérisation.

12. Composition de résine de polyéthylène selon la revendication 7, dans laquelle la composition de résine de polyéthylène est formée par mélange d'une résine de polyéthylène, d'un anhydride maléique, d'un stabilisant à la chaleur et d'un peroxyde avec le copolymère de polyacrylate polymérisé dans la seconde étape ou plus et par réalisation d'un procédé d'extrusion du matériau résultant.

13. Composition de résine de polyéthylène selon la revendication 1, dans laquelle la quantité d'anhydride maléique est de 0,1 à 2,5 parties en poids, par rapport à la résine de base à raison de 100 parties en poids.
